# EUROPÄISCHE PATENTSCHRIFT

(11) **EP 1 858 354 B1**
(45) Veröffentlichungstag und Bekanntmachung des Hinweises auf die Patenterteilung: **02.10.2013**
(21) Anmeldenummer: 06723353.6
(22) Anmeldetag: 10.03.2006
(51) Int. Cl.: A23L 1/317, A23B 4/005, A23B 4/00, A23L 3/015, A23L 2/02, A23L 3/02, A23L 3/10

(54) **VERFAHREN ZUR BEHANDLUNG VON LEBENSMITTELN, INSBESONDERE ZUM HALTBARMACHEN VON FRISCHEN WURST- ODER FLEISCHWAREN**
METHOD FOR TREATING FOODSTUFFS, PARTICULARLY FOR PRESERVING FRESH SAUSAGE OR MEAT PRODUCTS
PROCEDE POUR LE TRAITEMENT DE PRODUITS ALIMENTAIRES, NOTAMMENT POUR LA CONSERVATION DE CHARCUTERIE OU DE VIANDE FRAICHE

(30) Priorität: 15.03.2005 DE 102005011868
(43) Veröffentlichungstag der Anmeldung: 28.11.2007
(73) Patentinhaber: Deutsches Institut für Lebensmitteltechnik e.V., 49610 Quakenbrück (DE)
(72) Erfinder: KORTSCHACK, Fritz, 14089 Berlin (DE)
(74) Vertreter: Meissner, Bolte & Partner
(86) Internationale Anmeldenummer: PCT/EP2006/002240
(87) Internationale Veröffentlichungsnummer: WO 2006/097248

(56) Entgegenhaltungen:
- EP-A- 0 891 781
- EP-A- 1 512 332
- EP-A- 1 526 091
- DE-B- 1 164 261
- US-A- 3 531 300
- US-A- 3 892 058
- US-A- 6 117 460
- PATENT ABSTRACTS OF JAPAN Bd. 016, Nr. 061 (C-0910), 17. Februar 1992 (1992-02-17) -& JP 03 258259 A (DAINIPPON PRINTING CO LTD), 18. November 1991 (1991-11-18)

## Beschreibung

Die Erfindung betrifft ein Verfahren zur Behandlung von Lebensmitteln, insbesondere zum Haltbarmachen von frischen Wurst- oder Fleischwaren, mittels zeitlich befristeter Einwirkung von Temperatur und/oder Druck oder Hochdruck.

Aus der DE 102 45 603 A1 ist ein Verfahren zur Behandlung von Fleisch vorbekannt, wobei dort konkret auf eine sogenannte Warmfleisch-Zerlegung abgestellt wird. Nach dem Entbeinen von Schlachttierkörpern in warmem Zustand, Zerteilen der entbeinten Schlachttierkörper zu Portionseinheiten findet ein Verpacken der Portionseinheiten und Kühlen dieser verpackten Einheiten unter definierten Bedingungen statt. Erfindungsgemäß zielt die dortige Verpackung der Portionseinheiten auf eine Anwendung eines äußeren Druckes, insbesondere Flüssigkeitsdrucks, mittels einer Folie oder einer Membran, so dass die Portionseinheiten jeweils möglichst lufteinschlußfrei eng umschlossen sind.

In US3892058 wird ein Verfahren zur Herstellung von sterilisierten Lebensmitteln, welche in flexiblen Containern verpackt sind, offenbart. Der äußere Druck in Anhängigkeit von der Behandlungstemperatur dem Innendampfdruck in dem Verpackungsbehältnis anpassen muss, um ungewollte irreversible Auswölbungen des Packmaterials zu verhindern. Die Dehnung der Packungswand durch den Dampfdruck des Behandlunsgutes darf offensichtlich lediglich in einem eng vorgegebenen Bereich erfolgen. Das dargelegte verfarhren betrifft die Konservierung mittels "Kurzzeit/Hochtemperatur" (high/short-Behandlung).

Die gewünschte Verpackung, wonach die Portionseinheiten jeweils eng und anliegend vom Verpackungsmaterial umschlossen werden, wird dadurch realisiert, dass eine Portionseinheit auf eine Folie verbracht und mit einer weiteren Folie abgedeckt wird. Die Außenseite der ersten, unteren Folie wird mit dem vorerwähnten Flüssigkeitsdruck beaufschlagt, so dass sie sich gegebenenfalls nach einem vorherigen Abpumpen von Luft aus einem Folienzwischenraum eng und ohne Faltenbildung an das zu verpackende Material anschmiegt. Durch den wirkenden äußeren Flüssigkeitsdruck werden die oben liegende Folie und die unten liegende Folie aufeinander zu bewegt und dann miteinander verschweißt, sobald der Kontakt zwischen den Folien hergestellt ist. Der Aufbau des Fluiddrucks kann dadurch erfolgen, dass die Folien mitsamt dem zwischen den Folien angeordneten Fleisch mittels einer Senkvorrichtung in eine Flüssigkeit hineingedrückt werden, bis obere und untere Folie in Berührung kommen. Um den Verpackungsvorgang zu beenden, erfolgt die Versiegelung durch das erwähnte Schweißen. Die verwendeten Folien sind bei Behandlungstemperatur entweder ausreichend flexibel oder sie werden mittels der

Flüssigkeit leicht erwärmt, so dass das erwünschte Anschmiegen an das Fleisch erfolgen kann. Das Anschmiegen der Folien kann durch den Einsatz unter Wärme schrumpffähigen Materials verbessert werden.

Aus Fleischmagazin, Heft, 9/2002, Seite 42 ff. ist ein Verpackungsverfahren für schlachtwarmes Fleisch vorbekannt, wobei dort von einer Vorratsrolle auf der Verpackungsmaschine ein dauerelastischer Folienschlauch durch ein Verpackungsrohr von hinten zugeführt wird. An der vorderen Öffnung des Verpackungsrohrs wird der Folienschlauch durch Greifhaken bis zum Rand des Verpackungsrohrs geöffnet. Anschließend wird in dem Verpackungsschlauch ein Unterdruck erzeugt und das Fleischstück vor die Öffnung gehalten.
Durch den Unterdruck wird das Fleischstück trotz seiner klebrigen Oberfläche in den Verpackungsschlauch hineingesaugt und dehnt diesen hierbei in seinem Umfang. Wenn das Fleischstück die richtige Position erreicht hat, wird der Unterdruck abgeschaltet. Die elastische Verpackung stellt sich selbsttätig zurück und umschließt das Fleischstück fest. Das derart verpackte Fleischstück kann dann dem Verpackungsrohr entnommen werden. Die offenen Enden der Verpackung werden an einer separaten Verschließeinrichtung verschlossen.
Mit der vorstehend beschriebenen Methodik der Verpackung innerhalb der Warmfleischproduktion ist ein vorteilhaftes Abpacken möglich und es entsteht ein optisch attraktives Produkt.

Ebenfalls ist es bekannt, Fleisch- und Wurstwaren durch eine Hochdruck-behandlung haltbar zu machen, wobei die Hochdruckbehandlung aus fertigungstechnologischen und ökonomischen Gründen nach Möglichkeit in der Verkaufsverpackung erfolgen soll. Es hat sich jedoch gezeigt, dass z.B. bei einer Hochdruckbehandlung von Würstchen, die sich in einer Packung befinden, durch die Behandlung in der Hochdruckanlage das Verpackungsmaterial während der Druckbehandlung Kräften unterliegt, die zu Knickstellen führen, wodurch letztendlich Feuchtigkeit, aber auch Keime eintreten können.

Aus dem Vorgenannten ist es daher Aufgabe der Erfindung, ein weiterentwickeltes Verfahren zur Behandlung von Lebensmitteln, insbesondere zum

Haltbarmachen von frischen Wurst- oder Fleischwaren mittels zeitlich befristeter Einwirkung von Temperatur und/oder Druck oder Hochdruck sowie zum anschließenden In-Verkehr-bringen der Ware anzugeben, wobei die Behandlung in der Verkaufsverpackung, z.B. einer Dose oder Schale, vorgenommen werden soll, und zwar ohne dass während der Behandlung zum Haltbarmachen Beschädigungen der Verpackung eintreten, die ansonsten dazu führen würden, dass eine Verkehrsfähigkeit nicht gegeben ist und ein Umpacken notwendig wird.

Die Lösung der Aufgabe der Erfindung erfolgt durch ein Verfahren gemäß Definition nach Patentanspruch 1, wobei die Unteransprüche mindestens zweckmäßige Ausgestaltungen und Weiterbildungen darstellen.

Erfindungsgemäß wird bei dem Verfahren zur Behandlung von Lebensmitteln, insbesondere zum Haltbarmachen von frischen Wurst- oder Fleischwaren, mittels zeitlich befristeter Einwirkung von Temperatur und/oder Druck oder Hochdruck sowie zum anschließenden In-Verkehr-bringen der Ware die bereits verpackte Ware dem Behandlungsschritt unterzogen, wobei für Teile des Verpackungsmaterials eine dehnbare, restelastische oder dauerelastische Eigenschaften aufweisende Folie verwendet wird.

Durch die Druckbehandlung wird ein In-Kontakt-bringen der Folie sowie eine Verdichtung des von der Folie eingeschlossenen Guts bewirkt mit der Folge, dass eine anschließende oder einhergehende Wärme- oder Kältebehandlung aufgrund optimierter Wärmeleitfähigkeit weniger energieintensiv oder verkürzt durchführbar ist.

Die Hochdruck-Behandlung kann zeitgleich mit einer thermischen Behandlung durchgeführt werden.

In Ausgestaltung der Erfindung weist die Verkaufsverpackung starre oder halbstarre Teile auf, wobei ein Verpackungsverschluss durch die erwähnte elastische Folie erfolgt, welche unter Druckbehandlung einer Dehnung unterliegt und anschließend im Wesentlichen in ihre Ursprungsform zurückgeht.

Bei einer dosen- oder schalenartigen Verpackung wird die Folie als oberer Abschluss verwendet.

Die Dicke und die Stabilität des starren Teiles des Verpackungsmaterials sind so gewählt, dass eine Verformung dieses Teiles während der Druck- oder Hochdruckbehandlung ausgeschlossen ist.

Mit Hilfe des vorstehend erläuterten Verfahrens können in technologisch optimierter Weise frisches, gekühltes Fleisch oder entsprechende Wurstprodukte angeboten werden, wobei hierdurch den Erfordernissen des Marktes Rechnung getragen wird. Durch das Haltbarmachen unmittelbar in der Verkaufsverpackung und eine sich anschließende konsequente Einhaltung der Kühlkette kann in Verbindung mit der Verpackungsqualität ein optisch sehr ansprechendes Produkt dem Verbraucher angeboten werden.

Es liegt im Sinne der Erfindung, dass die Verpackung der Wurst- oder Fleischwaren unter Schutzgas-Atmosphäre erfolgt, wobei die Art und Zusammensetzung des jeweiligen Gasgemisches in Abhängigkeit von dem Wasseraktivitätswert und den Risiken und Parametern mikrobieller Belastungen gewählt wird.

Bei einer Nutzung des vorgestellten Verfahrens zum Transport von Frischfleisch vom Hersteller hin zum Verbraucher oder Großverbraucher sind wiederverwendbare Transportbehälter, z.B. aus Metall oder glasfaserverstärktem Kunststoffmaterial denkbar, wobei diese Behälter mit einer entsprechend elastischen Folie an zumindest einer Seite luftdicht überzogen und damit verschlossen werden. Diese Transportbehälter können je nach dem gegebenen Zerlegegrad kleine Fleischstücke, Schnitzel, Steaks, Koteletts und so weiter bis hin zu Rindervierteln oder Schweinehälften aufnehmen. Die Transportbehälter können in Ausgestaltung der Erfindung zur Qualitätssteigerung und Verlustreduzierung mit schlachtwarmen Produkten bestückt und unter Druck zum Zweck der Komprimierung der vorhandenen isolierenden Gasschicht zum Erhalt eines besseren Wärmeübergangs heruntergekühlt werden. Nach Abschluss der Temperierung wird der Außendruck der Hochdruck- oder Druckbehandlung aufgehoben, so daß die sich dann entspannende Schutzgas-Atmosphäre wieder den gesamten Innenraum des entsprechenden Behälters einnimmt.

Die Erfindung soll nachstehend anhand von Ausführungsbeispielen näher erläutert werden.

Gemäß einem ersten Ausführungsbeispiel wurde Frischfleisch vom Rind und auch vom Schwein warm (>34°C) zerlegt, portioniert und in eine vorkonfektionierte Schale gelegt. Die Schale wurde in einer Verpackungsmaschine mit einer flexiblen Folie überzogen, evakuiert und mit einem Gasgemisch rückbegast. Im Anschluss an die Begasung wurden die umlaufenden Schalenränder mit der Oberfolie verschweißt, wobei darauf zu achten war, dass die Schweißnähte ausreichend abkühlen konnten, um eine dauerhafte Verbindung der Kunststoffe zu erzielen. Die derartigen Frischfleischpackungen wurden in einen mit Wasser befüllten Druckbehälter gegeben und dort bei ca. 3 bar Druck auf 15° C heruntergekühlt. Nach Eintritt des "rigor mortis" im Fleisch wurden die Packungen durch Austausch des weiterhin unter Druck stehenden Wassers auf 2° C gekühlt.

Der angelegte Druck von ca. 3 bar reichte aus, das Gasgemisch soweit zu komprimieren, dass die gedehnte Deckelfolie und der Bodenbereich der Verpackungsschale unmittelbaren Kontakt zum Behandlungsgut (Rind- bzw. Schweinefleisch) hatten und ein guter Wärmeübergang vom Warmfleisch (>34° C) zum Kühlmedium (Wasser von zunächst 15° C und später 2° C) erfolgte.

Nachdem der Druck in dem Druckbehälter abgebaut war, konnte festgestellt werden, dass die flexible Deckelfolie wieder ihre Ausgangsform annahm. Es konnte äußerlich kein Unterschied zu einer konventionell hergestellten Fleischpackung festgestellt werden.

Die so hergestellten Packungen konnten problemlos in den Verkauf gegeben werden, wobei die Vorteile der Warmfleischzerlegung und -Verpackung realisiert wurden.

Ein weiteres Beispiel belegt, dass durch die Hochdruckbehandlung (6000 bar) von fertigen Selbstbedienungs-(SB)-Packungen (begaster Aufschnittschinken) unerwünschte Keime abgetötet werden können. Bestimmte Packungsgeometrien (große Volumen) konnten jedoch nicht einem Hochdruck unterworfen werden, da nach der Hochdruckbehandlung die relativ steifen Folien Knickstellen aufwiesen, was zu einer "Leckage" führte. Für diese Folie wurde die Deckelfolie bekannter SB-Packungen durch eine flexible Folie ersetzt. Dabei traten keine Leckagen mehr auf, weil sich nur die flexible Folie unter Druck dehnte und nach Aufhebung des Drucks wieder in die Ursprungsform zurück fand.

Ein ergänzendes Beispiel belegt, dass befüllte SB-Packungen unter Druck pasteurisiert werden können. In begasten Schalen verpackte Bratwurst wurde in einem Autoklaven bei >3 bar auf 72° C erhitzt und ca. 15 Minuten unter diesem Druck bei konstanter Temperatur gehalten. Anschließend wurden die Packungen weiterhin unter >3 bar Druck auf ca. 35°C heruntergekühlt und dem Autoklaven entnommen. Die aufgeblähten Packungen (das Gas wölbte die Deckelfolie und die Wandungen der Tiefziehpackung nach außen) wurden in einem Kühlraum weiter auf ca. 7° C weiter heruntergekühlt, wobei das Gasvolumen schrumpfte und die Packungen nicht mehr von konventionell gefertigten SB-Packungen zu unterscheiden waren. Durch die Möglichkeit, auch begaste Packungen zu pasteurisieren, ist die Reinraumtechnik während des Verpackungsvorgangs zur Erhöhung der Produktstabilität entbehrlich.

## Patentansprüche

1. Verfahren zur Behandlung von Lebensmitteln zum Haltbarmachen von frischen Wurst- oder Fleischwaren, mittels zeitlich befristeter Einwirkung von Temperatur und Druck oder Hochdruck sowie zum anschließenden In-Verkehr-bringen der Ware, wobei die Ware bereits verpackt dem Druck- und Temperatur-Behandlungsschritt unterzogen und für Teile des Verpackungsmaterials eine dehnbare, restelastische oder dauerelastische Eigenschaften aufweisende Folie verwendet wird, wobei die Verpackung starre oder halbstarre Teile umfaßt, wobei ein Verpackungsverschluß durch die Folie erfolgt, welche unter der Druckbehandlung einer Dehnung unterliegt und anschließend im Wesentlichen in ihre Ursprungsform zurückgeht und weiterhin durch die Druckbehandlung ein In-Kontakt-kommen der Folie mit der Ware sowie eine Verdichtung der von der Folie eingeschlossenen Ware bewirkt wird, mit der Folge, daß die einhergehende Wärme- oder Kältetemperatur-Behandlung aufgrund optimierter Wärmeleitfähigkeit weniger energieintensiv oder verkürzt durchführbar ist.

2. Verpackung für ein Verfahren nach Anspruch 1,
**dadurch gekennzeichnet, daß**
bei einer dosen- oder schalenartigen Verpackung die Folie als oberer Abschluß oder Deckel eingesetzt wird.

## Claims

1. Method for the treatment of foodstuffs for preserving fresh sausage or meat products by means of a time-limited temperature and pressure or highpressure influence, and for placing the product on the market thereafter, wherein the packed product is subjected to the pressure and temperature treatment step and a film having expandable properties, a remaining or permanent elasticity is used for parts of the packaging material, wherein the packaging comprises rigid or semi-rigid parts, wherein the sealing of the packaging is achieved with the film which is subjected to an expansion under the pressure treatment and then returns substantially to its original shape, and wherein further the pressure treatment brings the film into contact with the product and compresses the product enclosed by the film, with the consequence that the heating or cooling temperature treatment associated therewith is less energy-intensive or performable in less time due to an optimized heat conductivity.

2. Packaging for a method according to claim 1,
**characterized in that**
the film is used as top closure or lid if a can or a tray are used as packaging.

## Revendications

1. Procédé pour le traitement de produits alimentaires en vue de la conservation de charcuterie ou de viande fraîche, au moyen d'une action temporellement limitée de température et de pression ou de haute pression, et pour la commercialisation successive des produits, dans lequel les produits déjà emballés sont soumis à l'étape de traitement sous pression et en température et on utilise pour des parties du matériau d'emballage un film extensible, présentant des propriétés d'élasticité résiduelle ou d'élasticité permanente, dans lequel l'emballage inclut des parties rigides ou semi-rigides, dans lequel une fermeture de l'emballage a lieu au moyen de la feuille, laquelle est soumise à un allongement par le traitement sous pression et retourne ensuite sensiblement à sa forme d'origine, et en outre, du fait du traitement sous pression on provoque une venue en contact du film avec le produit ainsi qu'un compactage du produit enfermé par le film, avec pour conséquence qu'un traitement concomitant en chaleur ou à froid est susceptible d'être exécuté avec une moindre dépense en énergie ou de manière raccourcie grâce à une conductivité thermique optimisée.

2. Emballage pour un procédé selon la revendication 1,
**caractérisé en ce que** dans un emballage en forme de boîte ou de coque, le film est employé à titre de fermeture supérieure ou de couvercle.
